# EUROPÄISCHE PATENTSCHRIFT

(11) **EP 1 790 462 B1**
(45) Veröffentlichungstag und Bekanntmachung des Hinweises auf die Patenterteilung: **23.02.2011**
(21) Anmeldenummer: 06024429.0
(22) Anmeldetag: 24.11.2006
(51) Int. Cl.: B29C 65/64, B29C 65/56, B23K 20/12, F16B 5/00

(54) **Verfahren zum Verbinden eines metallischen Bolzens mit einem Kunststoff-Werkstück**
Process for joining a metallic bolt to a plastic workpiece
Procédé pour connecter un boulon à une pièce en matière plastique

(30) Priorität: 28.11.2005 DE 102005056606
(43) Veröffentlichungstag der Anmeldung: 30.05.2007
(73) Patentinhaber: Helmholtz-Zentrum Geesthacht Zentrum für Material- und Küstenforschung GmbH, 21502 Geesthacht (DE)
(72) Erfinder: de Traglia Amancio Filho, Sergio, 21502 Geesthacht (DE); Beyer, Matthias, 21391 Reppenstedt (DE); dos Santos, Jorge F., 21395 Avendorf (DE)
(74) Vertreter: UEXKÜLL & STOLBERG

(56) Entgegenhaltungen:
- WO-A-98/42988
- WO-A-02/062518
- DE-A1- 19 815 217
- FR-A- 2 883 499
- JP-A- 61 083 022
- US-A1- 3 481 803
- US-A1- 3 654 688
- US-A1- 5 271 785
- US-A1- 2001 005 541
- US-A1- 2003 135 974
- US-A1- 2005 126 680

## Beschreibung

Die vorliegende Erfindung betrifft ein Verfahren zum Verbinden eines metallischen Bolzens mit einem Kunststoff-Werkstück. Dabei wird im Folgenden unter einem "Bolzen" ein im Wesentlichen zylindrisches und damit rotationssymmetrisches Element mit einer Umfangsfläche verstanden, wobei der Durchmesser im Bereich der Umfangsfläche als der Durchmesser des Bolzens verstanden wird.

In der Automobil-, Schiffbau- und Bauindustrie werden immer häufiger sogenannte Multi-Material-Strukturen eingesetzt, die einerseits Kunststoffe und andererseits Metalle umfassen, wobei die beiden Materialbestandteile kraftschlüssig miteinander verbunden sind. Auf diese Weise werden die Eigenschaften beider Materialien kombiniert, um so einen Verbundwerkstoff mit verbesserten Eigenschaften zu erhalten. Um die Kunststoffe und Metalle miteinander zu verbinden, können zunächst mechanische Verbindungen und Klebeverbindungen eingesetzt werden.

Bei den mechanischen Verbindungen kommen insbesondere Niet- oder Clinch-Verbindungen in Frage, die jedoch die folgenden Nachteile aufweisen. Zum einen treten in den Werkstücken hohe Spannungskonzentrationen auf. Zum anderen kann es zu einem späteren Lockern der Verbindung infolge von Kriechen, Feuchtigkeit und Relaxation kommen. Schließlich ist an mechanischen Verbindungen nachteilhaft, dass deren äußeres Erscheinungsbild einen Einsatz im Sichtbereich ausschließt bzw. es erforderlich ist, diese Verbindung nachträglich zu bearbeiten.

Klebeverbindungen weisen den Nachteil auf, dass die Festigkeit der Verbindung nur schwer abgeschätzt werden kann. Ferner ergibt sich das Problem, dass bedingt durch die Aushärtzeit eines Klebers die Taktzeiten für das Erstellen einer Klebeverbindung vergleichsweise lang sind. Außerdem können beim Aushärten Lösungsmittel freigesetzt werden, sodass eine Emissionsüberwachung beim Herstellen der Klebeverbindung erforderlich werden kann. Wenn für das Aushärten außerdem erhöhte Temperaturen erforderlich sind, können die Werkstücke in Mitleidenschaft gezogen werden. Schließlich kann es für eine zuverlässige Klebeverbindung erforderlich sein, die zu verbindenden Oberflächen vorzubehandeln, was einen zusätzlichen Aufwand bedeutet.

Neben den mechanischen Verbindungen und den Klebeverbindungen sind noch Schweißverfahren bekannt, um Multi-Material-Strukturen herzustellen. Die dafür angewandten Schweißverfahren umfassen Ultraschallschweißen, Widerstandsschweißen, Vibrationsschweißen, Induktionsschweißen und Infrarotschweißen. Hierbei treten jedoch die folgenden prinzipiellen Nachteile zutage. Zum einen ist auch hier eine Oberflächenvorbehandlung erforderlich und zum anderen ist wegen des vergleichsweise geringen Wirkungsgrades der Energieverbrauch zum Erstellen einer derartigen Schweißverbindung relativ hoch. Außerdem weisen die so hergestellten Verbindungen eine nur geringe Zuverlässigkeit auf, sodass sie in sensiblen Bereichen nicht eingesetzt werden können.

In der Zwischenzeit sind sogenannte Hybrid-Verbindungstechniken entwickelt worden, bei denen versucht wird, durch die Kombination von zwei oder mehr konventionellen Verbindungsmethoden eine Verbesserung der Verbindungseigenschaften erreichen. Aus der DE 101 49 633 A1 ist dazu das Metall-Kragen-Verbinden bekannt, wobei in das Metallteil zunächst ein Loch gestanzt wird, sodass das Loch anschließend von einem kreisförmigen Metall-"Kragen" umgeben ist. Dieser Kragen wird danach in das mit dem Metallteil zu verbindende Kunststoffteil gepresst, sodass danach eine formschlüssige Verbindung vorliegt. Bei diesem Einpressen kann es jedoch zu Haarrissen in dem Kunststoffteil kommen, die wiederum zum Versagen der Verbindung unter Belastung führen können.

Bei einem anderen Hybrid-Verfahren werden ein Metall und ein Kunststoff in der Weise miteinander verbunden, dass der Kunststoff in Hohlräume eingespritzt wird, die zuvor in den Metallteilen ausgebildet worden sind, sodass dadurch eine formschlüssige Verbindung zwischen Kunststoff einerseits und Metall andererseits hergestellt wird. Bedingt durch die aufwendige Vorbearbeitung der Metallteile ist ein derartiges Verfahren jedoch sehr zeitaufwendig und benötigt lange Taktzeiten.

Die DE 198 15 217 A1 beschreibt ein Verfahren zum Verbinden einer metallischen Schraube mit einem Körper aus Schaumstoff, wobei die Schraube rotierend in den Körper eingedrückt wird, so dass das Material des Körpers aufgrund der Reibungswärme schmilzt und mit dem Schaft und dem Gewinde der eingeführten Schraube formschlüssig verklebt. Zur Sicherung gegen ein Herausziehen der Schraube können hierbei unterhalb des Schraubenkopfes radial gerichtete Rippen vorgesehen sein, die einen keilförmigen Querschnitt aufweisen

Die US 2001/005541 A1 betrifft ein zweistufiges Verfahren zur Befestigung eines Emblems an Airbagabdeckungen von Fahrzeugen. Hierbei werden zunächst eine Vielzahl von Füßen, die distale Enden haben und auf der Rückseite eines Emblems ausgebildet sind, in eine Vielzahl von in der Airbagabdeckung ausgebildeten Löchern eingebracht. Anschließend werden die distalen Enden der Füße beispielsweise mittels eines Ultraschallrüttlers thermisch verformt, so dass es zu einer Ausbildung von Brücken zwischen den großen Füßen und von Köpfen auf den kleinen Füßen kommt.

In der US 3 654 688 A1 werden hohle metallische Einsätze in thermoplastischen Körper beschrieben, um Verankerungsmittel bereitzustellen, mittels derer die Körper an anderen Strukturen befestigt werden können. Die Einsätze weisen auf ihrer Auβenseite umlaufende oder axial ausgerichtete Schlitze, Einkerbungen, Rändelungen oder andere irreguläre Oberflächeneigenschaften auf, um gegenüber einer Axial- und Rotationsbewegung in dem thermoplastischen Körper gesichert zu sein.

Aus der US 3 481 803 ist ein Reibschweißverfahren zum Verbinden eines thermoplastischen stabförmigen Bolzens mit einem Körper aus thermoplastischem Material bekannt. Durch kontinuierliches Hineindrehen des Bolzens in die thermoplastische Schicht wird der Bolzen aufgeschmolzen.

Ausgehend vom Stand der Technik liegt der vorliegenden Erfindung daher die Aufgabe zugrunde, ein Verfahren bereitzustellen, das eine zuverlässige Verbindung von metallenen Werkstücken einerseits und Kunststoff-Werkstücken andererseits ermöglicht und das in einfacher Weise ausgeführt werden kann und das zu einer größeren Belastbarkeit in axialer Richtung des Bolzens führt.

Diese Aufgabe wird durch ein Verfahren zum Verbinden eines metallischen Bolzens mit einem Kunststoff-Werkstück mit den folgenden Schritten gelöst:
- Bereitstellen eines ersten Kunststoff-Werkstücks und eines metallischen Bolzens und
- Einpressen des Bolzens in eine Oberfläche des ersten Kunststoff-Werkstücks, wobei der Bolzen während des Einpressens rotiert wird und wobei die Rotationsgeschwindigkeit des Bolzens so gewählt wird, dass das erste Kunststoff-Werkstück plastifiziert wird, sodass der Bolzen nach einem Stopp der Rotation formschlüssig in dem ersten Kunststoff-Werkstück verankert wird, wobei der Bolzen plaplastifiziert und verformt wird und wobei die Spitze des Bolzens verformt wird, indem sie derart aufgewölbt wird, dass der Durchmesser der Spitze größer als der des Abschnitts des Bolzens ist, der in das erste Kunststoff-Werkstück eingepresst wird.

Mittels des erfindungsgemäßen Verfahrens können Kunststoff-Werkstücke einerseits und metallische Werkstücke andererseits über den metallischen Bolzen miteinander verbunden werden. Dabei wird ausgenutzt, dass durch das Rotieren des Bolzens während des Einpressens zunächst ein dünner, den Bolzen umgebender Bereich des Kunststoff-Werkstücks plastifiziert wird und so das Eindringen des Bolzens in das Kunststoff-Werkstück ermöglicht wird. Wenn die Rotation gestoppt wird, härtet das Material des Kunststoff-Werkstücks aus, und es kann zu einem Formschluss zwischen dem Bolzen und dem Werkstück, insbesondere in axialer Richtung des Bolzens, kommen. Diese Verbindung zwischen Bolzen und Kunststoff-Werkstück kann erstellt werden, ohne dass es erforderlich ist, das Kunststoff-Werkstück vorzubehandeln. Des Weiteren sind keine komplizierten vorrichtungsmäßigen Aufbauten zur Durchführung des erfindungsgemäßen Verfahrens erforderlich. Um eine zuverlässige Verbindung sicherzustellen, ist es lediglich notwendig, dass leicht zu kontrollierende Parameter, nämlich der auf den Bolzen aufgebrachte Druck sowie dessen Rotationsgeschwindigkeit, eingehalten werden.

Wenn das Material des Bolzens eine hohe Schmelztemperatur hat, wie es beispielsweise bei Stahl der Fall ist, kann der Bolzen in einer bevorzugten Ausführungsform des Verfahrens eine Profilierung auf seiner Umfangsfläche aufweisen, die als spiralförmig umlaufende Rippe ausgebildet sein kann oder eine Vielzahl von Ringen umfassen kann. Diese Profilierung führt nach dem Stopp der Rotation des Bolzens und dem anschließenden Aushärten des plastifizierten Materials des Kunststoff-Werkstücks zu dem erforderlichen Formschluss in axialer Richtung.

Der Bolzen, der eine Profilierung aufweisen kann, wird plastifiziert und verformt, wobei die Spitze des Bolzens in der Weise verformt wird, dass sie aufgewölbt wird, sodass der Durchmesser der Spitze größer als der des Abschnitts des Bolzens ist, der in das erste Kunststoff-Werkstück eingepresst wird. Dies ist bei einem Bolzenmaterial mit niedrigerem Schmelzpunkt vorteilhaft, wie beispielsweise bei Aluminium. Die Verformung kommt dadurch zustande, dass mit zunehmender Eindringtiefe die durch Reibung und Druck in dem Bolzen erzeugte Wärme erhöht wird, sodass es dann zu dessen Plastifizierung kommt. Die Wölbung der Spitze sorgt nach dem Stopp der Rotation für den erforderlichen Formschluss zwischen Bolzen und Kunststoff-Werkstück, wobei eine große Belastbarkeit der Verbindung insbesondere in axialer Richtung des Bolzens gewährleistet ist.

Wenn in bevorzugter Weise zwei Kunststoff-Werkstücke mit Hilfe des Bolzens mit einem metallenen Werkstück verbunden werden sollen, kann vor dem Einpressen des Bolzens das zweite Kunststoff-Werkstück auf dem ersten Kunststoff-Werkstück angeordnet werden und der Bolzen anschließend rotierend in das erste und das zweite Werkstück eingepresst werden.

In einer weiteren bevorzugten Ausführungsform des Verfahrens wird ein erstes Metall-Werkstück an das erste Kunststoff-Werkstück an einer Oberfläche angelegt, die der Oberfläche gegenüberliegt, in die der Bolzen eingepresst wird. Anschließend wird der Bolzen so tief in das erste Kunststoff-Werkstück eingepresst, dass die plastifizierte Spitze des Bolzens in Kontakt mit ersten Metall-Werkstück kommt, wobei weiter bevorzugt eine Schweißverbindung zwischen dem Bolzen und dem ersten Metall-Werkstück gebildet wird. Hierdurch wird erreicht, dass das an dem ersten Kunststoff-Werkstück anliegende erste Metall-Werkstück eine von der Verbindung unbeeinflusste Oberfläche aufweist.

Gemäß einer weiteren bevorzugten Ausführungsform des Verfahrens kann ein Sandwich-Element aus Kunststoff und Metall in der Weise hergestellt werden, das auf den ersten Kunststoff-Werkstück ein zweites Metall-Werkstück angeordnet wird, das eine Durchgangsbohrung für den Bolzen aufweist. Der Bolzen wird dann durch die Bohrung geführt und rotierend in das erste Kunststoff-Werkstück eingepresst. Dabei kann sich in weiter bevorzugter Weise auf der von dem zweiten Metall-Werkstück abgewandten Seite des ersten Kunststoff-Werkstücks ein weiteres Metall-Werkstück befinden, mit dem eine Schweißverbindung zu dem Bolzen eingegangen wird, wenn der Bolzen weit genug in das Kunststoff-Werkstück eingepresst worden ist.

Um das zweite Metall-Werkstück an dem ersten Kunststoff-Werkstück zu fixieren, weist der Bolzen vorzugsweise einen Kopf mit einem vergrößerten Durchmesser auf. Dabei kann zusätzlich verursacht durch die Rotation des Bolzens eine Reibschweißverbindung zwischen dem Kopf des Bolzens einerseits und dem zweiten Metall-Werkstück andererseits gebildet werden.

Im Folgenden wird die vorliegende Erfindung anhand einer lediglich bevorzugte Ausführungsbeispiele zeigenden Zeichnung erläutert. In der Zeichnung zeigen
- Fig. 1: die Schritte einer ersten Ausführungsform des erfindungsgemäßen Verfahrens,
- Fig. 2: einen Querschnitt durch eine Probe, in der eine Verbindung mittels der ersten Ausführungsform des erfindungsgemäßen Verfahrens hergestellt wurde,
- Fig. 3: die Schritte einer zweiten Ausführungsform des erfindungsgemäßen Verfahrens zur Verbindung eines Kunststoff-Werkstücks mit einem ersten Metall-Werkstück,
- Fig. 4: eine dritte Ausführungsform des erfindungsgemäßen Verfahrens zur Verbindung eines Metall-Werkstücks mit einem Kunststoff-Werkstück,
- Fig. 5: eine vierte Ausführungsform des erfindungsgemäßen Verfahrens zur Verbindung zweier Metall-Werkstücke mit einem Kunststoff-Werkstück und
- Fig. 6: zwei Ausführungsbeispiele metallener Bolzen zur Verbindung mit Kunststoff-Werkstücken.

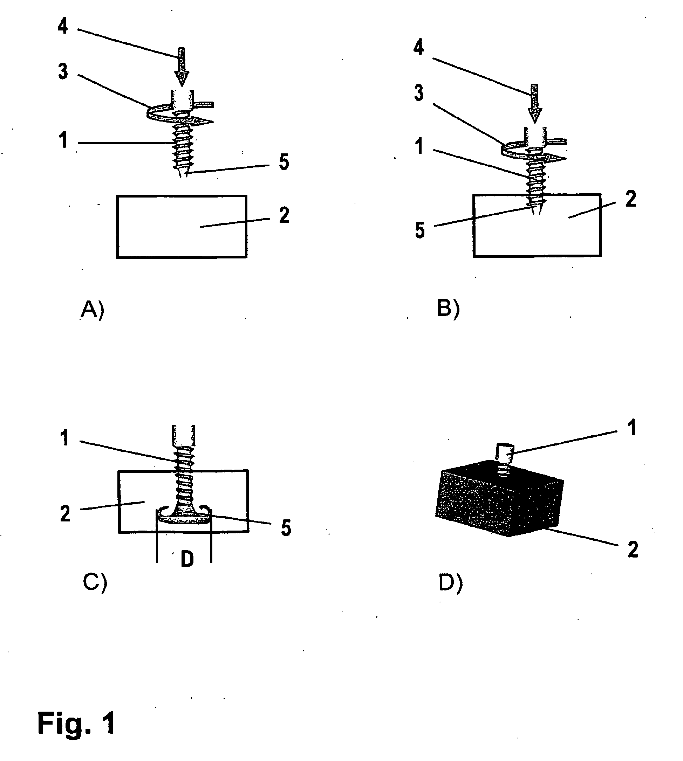

In Fig. 1 sind die Schritte gezeigt, um einen metallischen Bolzen 1 mit einem ersten Kunststoff-Werkstück 2 formschlüssig zu verbinden. Anschließend kann ein in Fig. 1 nicht dargestelltes Metall-Werkstück mit Hilfe des metallischen Bolzens 1 mit dem ersten Kunststoff-Werkstück 2 verbunden werden.

Zur Verbindung des Bolzens 1 mit dem ersten Kunststoff-Werkstück 2 wird in dieser Ausführungsform des erfindungsgemäßen Verfahrens der Bolzen 1 in Rotation versetzt, wie dies durch den Pfeil 3 angedeutet ist (Schritt A). Ferner wird der Bolzen 1 in Richtung des Pfeils 4 auf das erste Kunststoff-Werkstück 2 abgesenkt und in dieses eingepresst (siehe Schritt B). Infolge der Rotation des Bolzens 1 wird ein dünner Bereich des Kunststoff-Werkstücks 2 um den Bolzen 1 herum plastifiziert. Wenn der Bolzen 1 weiter in das erste Kunststoff-Werkstück 2 eingepresst wird (Schritt C), wird die durch Reibung und Druck in dem Bolzen 1 auftretende Temperatur so hoch, dass der Bolzen 1 und insbesondere dessen Spitze 5 plastifiziert wird, da die durch Reibung zugeführte Wärmeenergie größer ist als die über den Bolzen 1 abfließende Wärme. Infolge der Plastifizierung wird in dieser bevorzugten Ausführungsform des Verfahrens die Spitze 5 des Bolzens 1 derart aufgewölbt, dass der Durchmesser D der Spitze 5 größer als der Durchmesser des übrigen Abschnitts des Bolzens 1 ist, der in das erste Kunststoff-Werkstück 2 eingepresst wird.

Wenn die Rotation des Bolzens 1 gestoppt wird, härtet das plastifizierte Material des ersten Kunststoff-Werkstücks 2 um den Bolzen 1 herum aus und die aufgewölbte Spitze 5 verbleibt in dieser Form, sodass eine formschlüssige Verbindung zwischen Kunststoff-Werkstück 2 und Bolzen 1 gebildet worden ist. (Siehe Schritt C und D). Der Bolzen 1 ist damit fest in dem ersten Kunststoff-Werkstück 2 verankert.

Bei diesem Ausführungsbeispiel des Verfahrens ist es auch möglich, dass nicht nur ein erstes Kunststoff-Werkstück 2 mit dem Bolzen 1 verbunden wird, sondern es kann auf der dem Bolzen 1 zugewandten Oberfläche des ersten Kunststoff-Werkstück 2 ein zweites Kunststoff-Werkstück (nicht dargestellt) angeordnet werden. Anschließend kann der Bolzen 1 rotierend in die Werkstücke eingepresst werden, sodass der Bolzen 1 dann mit beiden Kunststoff-Werkstücken verbunden ist.

In dieser ersten Ausführungsform des Verfahrens wird der Formschluss zwischen dem Bolzen 1 und dem Kunststoff-Werkstück 2 durch die Verformung der Spitze 5 des Bolzens 1 erreicht.

Die zur Durchführung des erfindungsgemäßen Verfahrens erforderliche Ausstattung mit Geräten ist erkennbar einfach. Es können herkömmliche Reibschweiß- oder Industriebohrmaschinen zur Durchführung verwendet werden, und die Aufspannung der Werkstücke kann der für das Reibschweißen oder für das Fräsen entsprechen. Zusätzlich weist die Verbindung zwischen dem Bolzen 1 und dem Kunststoff-Werkstück 2 eine hohe mechanische Festigkeit auf, da von einer geringen Spannungskonzentration im Kunststoff ausgegangen werden kann. Durch den vergrößerten Durchmesser D der Spitze 5 des Bolzens 1 und die damit verbundene formschlüssige Verbindung ist diese insbesondere in axialer Richtung des Bolzens 1 sehr belastbar.

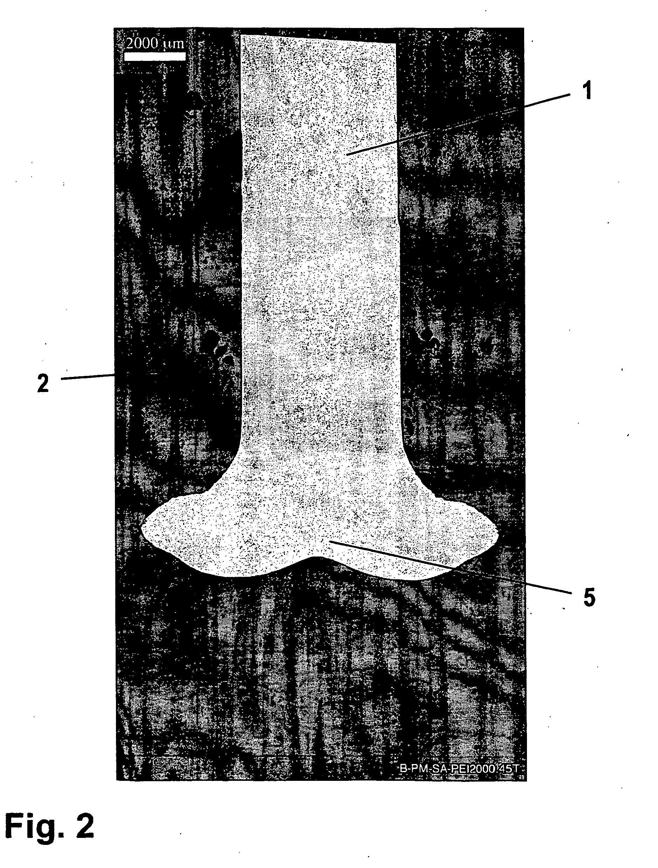

In Fig. 2 ist ein Querschnitt durch eine Probe gezeigt, in der eine Verbindung durch die erste Ausführungsform des erfindungsgemäßen Verfahrens hergestellt worden ist. Dabei wurde ein Bolzen 1 aus Aluminium (AA2024-T351) rotierend in ein Kunststoff-Werkstück 2 aus Polyetherimid (PEI) gepresst, wie dies bereits in Zusammenhang mit Fig. 1 beschrieben worden ist. Die Rotationsgeschwindigkeit des Bolzens 1 lag dabei zwischen 15000 bis 23000 U/min und der Druck, mit dem der Bolzen 1 gegen das Kunststoff-Werkstück 2 gepresst wurde, betrug zwischen 2 und 10 bar, sodass die Fügezeit für die Verbindung zwischen 0,3 und 3 Sek. lag. Dem Querschnitt ist deutlich die Verformung der Spitze 5 des Bolzens 1 in Folge der Plastifizierung zu entnehmen. Ein Versuch zur Messung der Zugfestigkeit der Verbindung in axialer Richtung des Bolzens 1 ergab, dass der Bolzen 1 bei einer Zugkraft von 9,54 kN reißt, sodass die Verbindung selbst deutlich höheren Belastungen Stand hält.

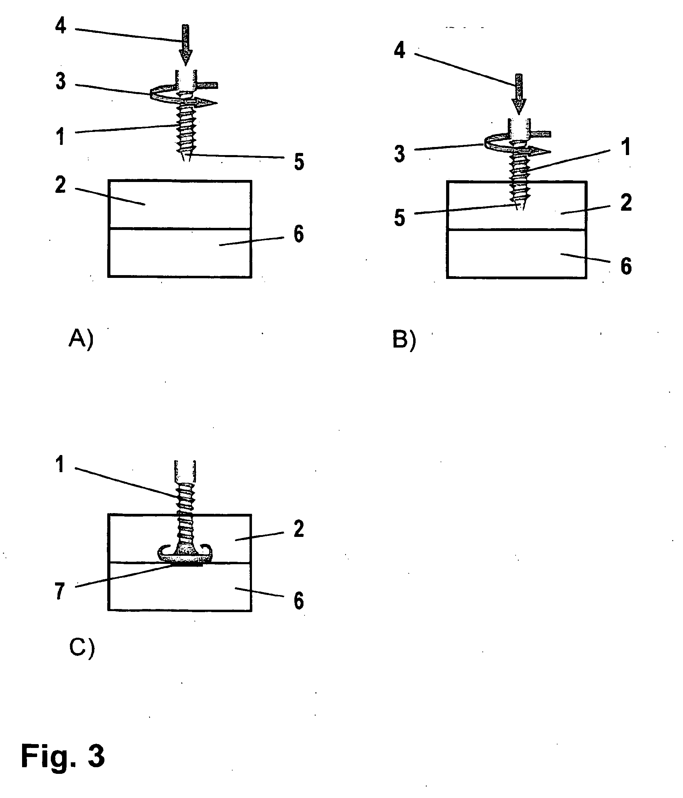

In Fig. 3 ist eine zweite Ausführungsform des erfindungsgemäßen Verfahrens dargestellt, bei dem mittels eines Bolzens 1 ein erstes Kunststoff-Werkstück 2 mit einen ersten Metall-Werkstück 6 verbunden wird, wobei das erste Metall-Werkstück 6 an einer Oberfläche des ersten Kunststoff-Werkstücks 2 anliegt, die der Oberfläche gegenüberliegt, in die der Bolzen 1 eingepresst wird (Schritt A).

Wie bereits im Zusammenhang mit Fig. 1 beschrieben, wird der Bolzen 1 rotierend in das erste Kunststoff-Werkstück 2 eingepresst, und zwar so tief, dass die Spitze 5 des Bolzens 1 in Kontakt mit der Oberfläche des ersten Metall-Werkstücks 6 kommt. Infolge der Reibung zwischen der Spitze 5 des Bolzens 1 und dem ersten Metall-Werkstück 6 wird die Spitze 5 plastifiziert und verwölbt sich. Gleichzeitig wird auch der dem ersten Kunststoff-Werkstück 2 naheliegende Bereich des ersten Metall-Werkstücks 6 plastifiziert, sodass es nach einem Stop der Rotation des Bolzens 1 zu einer Reibschweißverbindung 7 zwischen den Werkstücken 2, 6 kommt (siehe Schritt C).

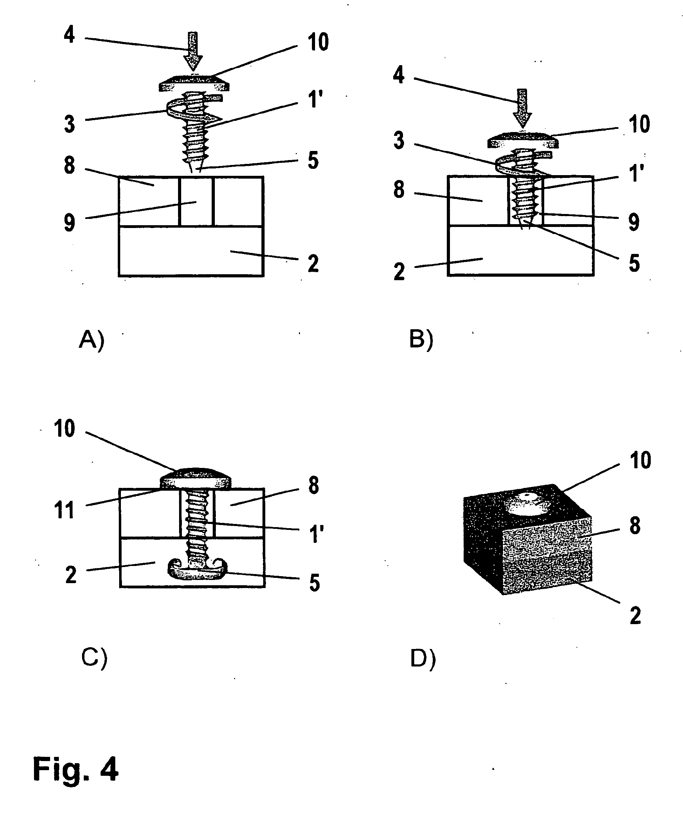

Fig. 4 zeigt eine weitere alternative Ausführungsform des erfindungsgemäßen Verfahrens, um ein erstes Kunststoff-Werkstück 2 mit einem Metall-Werkstück 8 zu verbinden. Dazu wird auf der Oberfläche des ersten Kunststoff-Werkstücks 2 ein zweites Metall-Werkstück 8 angeordnet, das eine Durchgangsbohrung 9 für den Bolzen 1' aufweist. Der Durchmesser der Durchgangsbohrung 9 ist dabei größer als der Außendurchmesser des Bolzens 1'. Der Bolzen 1' ist außerdem mit einem Kopf 10 versehen, der einen im Vergleich zum Rest des Bolzens 1' vergrößerten Durchmesser aufweist. Insbesondere ist der Durchmesser des Kopfs 10 größer als der der Durchgangsbohrung 9.

Der Bolzen 1' wird in die Durchgangsbohrung 9 eingeführt und anschließend unter Rotation in das erste Kunststoff-Werkstück 2 eingepresst, wie dies bereits im Zusammenhang mit der ersten Ausführungsform beschrieben worden ist. Durch die Reibung zwischen Bolzen 1' und Kunststoff-Werkstück 2 kommt es zu einer Verformung der Spitze 5, sodass eine formschlüssige Verbindung zwischen dem ersten Kunststoff-Werkstück 2 und dem Bolzen 1' gebildet wird. Außerdem führt die Reibung zwischen dem Kopf 10 des Bolzens 1' und dem zweiten Metall-Werkstück 8 an dessen Oberfläche zu einer Reibschweißverbindung 11 zwischen diesen Elementen. Damit ergibt sich eine besonders stabilen Verbindung zwischen dem ersten Kunststoff-Werkstück 2 und dem zweiten Metall-Werkstück 8.

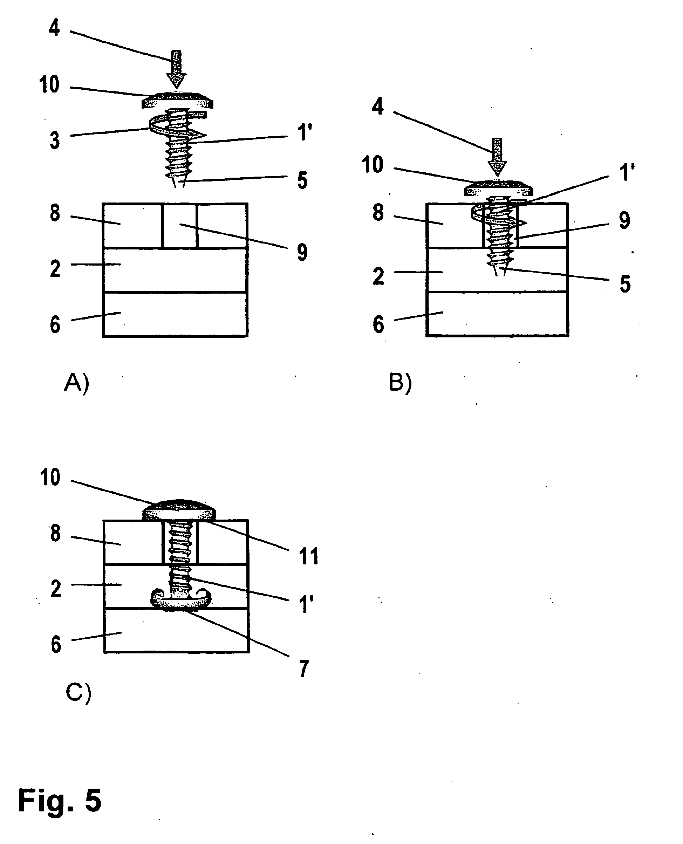

Fig. 5 zeigt schließlich eine Kombination der in den Fig. 3 und 4 gezeigten Ausführungsformen des erfindungsgemäßen Verfahrens, bei dem ein erstes Kunststoff-Werkstück 2 mit einem ersten Metall-Werkstück 6 und einem zweiten Metall-Werkstück 8 verbunden wird. Dabei wird zum einen eine formschlüssige Verbindung zwischen dem Bolzen 1' und dem ersten Kunststoff-Werkstück 2 durch die Verformung der Spitze 5 des Bolzens 1' gebildet, und andererseits werden Schweißverbindungen 7, 11 zwischen der Spitze 5 des Bolzens 1' und dem ersten Metall-Werkstück 6 sowie zwischen dem Kopf 10 und dem zweiten Metall-Werkstück 8 gebildet (siehe Schritt C).

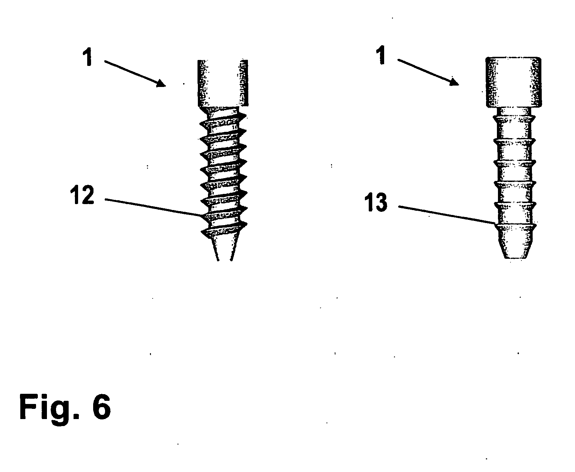

Zwar kann das erfindungsgemäße Verfahren auch mit einem Bolzen durchgeführt werden, der eine ebene Umfangsfläche aufweist. In Fig. 6 sind jedoch zwei bevorzugte Ausführungsbeispiele einer Profilierung des zylindrischen Bolzen 1 gezeigt. Im ersten Ausführungsbeispiel weist der Bolzen 1 eine spiralförmig verlaufende Umfangsrippe 12 auf, während im zweiten Ausführungsbeispiel eine Vielzahl von Ringen 13 vorgesehen ist. In beiden Fällen führt die Profilierung zu einer Vergrößerung der Reibung zwischen dem Bolzen 1 einerseits und dem Kunststoff-Werkstück 2 andererseits, sodass ein hinreichend großer Bereich des Kunststoff-Werkstücks 2 um den Bolzen 2 herum plastifiziert wird. Ferner führt die Profilierung dazu, dass nach dem Aushärten des plastifizierten Bereichs des Kunststoff-Werkstück 2 ein Formschluss zwischen dem Werkstück 2 und dem Bolzen 1 entsteht.

Mittels des erfindungsgemäßen Verfahrens können Metall-Werkstücke 4, 6 mit Kunststoff-Werkstücken 2 verbunden werden ohne das Oberflächenvorbehandlungen notwendig sind. Des Weiteren sind keine komplizierten und kostspieligen Vorrichtungen erforderlich, und die Taktzeiten zum Erstellen der Verbindung sind vergleichsweise kurz.

## Patentansprüche

1. Verfahren zum Verbinden eines metallischen Bolzens (1, 1') mit einem Kunststoff-Werkstück (2) umfassend die folgenden Schritte:
- Bereitstellen eines ersten Kunststoff-Werkstücks (2) und eines metallischen Bolzens (1, 1') und
- Einpressen des Bolzens (1, 1') in eine Oberfläche des ersten Kunststoff-Werkstücks (2), wobei der Bolzen (1, 1') während des Einpressens rotiert wird und wobei die Rotationsgeschwindigkeit des Bolzens (1, 1') so gewählt wird, dass das erste Kunststoff-Werkstück (2) plastifiziert wird, sodass der Bolzen (1, 1') nach einem Stopp der Rotation formschlüssig in dem ersten Kunststoff-Werkstück (2) verankert wird,
**dadurch gekennzeichnet, dass** der Bolzen (1, 1') plastifiziert und verformt wird und dass die Spitze (5) des Bolzens (1, 1') verformt wird, indem sie derart aufgewölbt wird, dass der Durchmesser (D) der Spitze (5) größer als der des Abschnitts des Bolzens (1, 1') ist, der in das erste Kunststoff-Werkstück (2) eingepresst wird.

2. Verfahren nach Anspruch 1, wobei der Bolzen (1, 1') eine Profilierung (12, 13) auf seiner Umfangsfläche aufweist.

3. Verfahren nach einem der Ansprüche 1 oder 2, wobei ein zweites Kunststoff-Werkstück auf dem ersten Kunststoff-Werkstück (2) angeordnet wird und der Bolzen (1, 1') rotierend in das erste und in das zweite Kunststoff-Werkstück (2) eingepresst wird.

4. Verfahren nach einem der Ansprüche 1 bis 3, wobei ein erstes Metall-Werkstück (6) an das erste Kunststoff-Werkstück (2) an eine Oberfläche angelegt wird, die der Oberfläche gegenüberliegt, in die der Bolzen (1, 1') eingepresst wird, und
wobei der Bolzen (1, 1') so tief in das erste Kunststoff-Werkstück (2) rotierend eingepresst wird, dass die Spitze (5) des Bolzens (1, 1') in Kontakt mit dem ersten Metall-Werkstück (6) kommt.

5. Verfahren nach Anspruch 4, wobei eine Schweißverbindung (7) zwischen dem Bolzen (1, 1') und dem ersten Metall-Werkstück (6) gebildet wird.

6. Verfahren nach einem der Ansprüche 1 bis 5, wobei über der Oberfläche des ersten Kunststoff-Werkstücks (2), in die der Bolzen (1, 1') rotierend eingepresst wird, ein zweites Metall-Werkstück (8) angeordnet wird, das eine Durchgangsbohrung (9) für den Bolzen (1, 1') aufweist, und
wobei der Bolzen (1, 1') durch die Bohrung (9) geführt wird und rotierend in das erste Kunststoff-Werkstück (2) eingepresst wird.

7. Verfahren nach Anspruch 6, wobei der Bolzen (1, 1') an dem dem ersten Kunststoff-Werkstück (2) abgewandten Ende einen Kopf (10) aufweist, der gegenüber dem in das Kunststoff-Werkstück (2) eingepressten Abschnitt einen vergrößerten Durchmesser hat.

8. Verfahren nach Anspruch 7, wobei zwischen dem zweiten Metall-Werkstück (8) und dem Kopf (10) eine Schweißverbindung (11) gebildet wird.

## Claims

1. Method of connecting a metallic bolt (1, 1') to a plastic workpiece (2), comprising the following steps:
- providing a first plastic workpiece (2) and a metallic bolt (1, 1'), and
- pressing the bolt (1, 1') into a surface of the first plastic workpiece (2), the bolt (1, 1') being rotated during the pressing-in, and the rotational speed of the bolt (1, 1') being selected in such a way that the first plastic workpiece (2) is plasticized, so that the bolt (1, 1') is anchored in the first plastic workpiece (2) in a positive-locking manner after the rotation is stopped,
**characterized in that** the bolt (1, 1') is plasticized and deformed and that the point (5) of the bolt (1, 1') is deformed by being arched in such a way that the diameter (D) of the point (5) is greater than that of the section of the bolt (1, 1') which is pressed into the first plastic workpiece (2).

2. Method according to claim 1, the bolt (1, 1') having a profiling (12, 13) on its circumferential surface.

3. Method according to one of claims 1 or 2, a second plastic workpiece being arranged on the first plastic workpiece (2), and the bolt (1, 1') being pressed in a rotational manner into the first and the second plastic workpiece (2).

4. Method according to one of claims 1 to 3, a first metal workpiece (6) being placed on the first plastic workpiece (2) against a surface which is opposite the surface into which the bolt (1, 1') is pressed, and
the bolt (1, 1') being pressed in a rotational manner into the first plastic workpiece (2) to such a depth that the point (5) of the bolt (1, 1') comes into contact with the first metal workpiece (6).

5. Method according to claim 4, a welded connection (7) being formed between the bolt (1, 1') and the first metal workpiece (6).

6. Method according to one of claims 1 to 5, a second metal workpiece (8) which has a through-hole (9) for the bolt (1, 1') being arranged over the surface of the first plastic workpiece (2) into which the bolt (1, 1') is pressed in a rotational manner, and
the bolt (1, 1') being passed through the hole (9) and pressed in a rotational manner into the first plastic workpiece (2).

7. Method according to claim 6, the bolt (1, 1') having a head (10) at the end facing away from the first plastic workpiece (2), which head has a diameter greater than that of the section which is pressed into the first plastic workpiece (2).

8. Method according to claim 7, a welded connection (11) being formed between the second metal workpiece (8) and the head (10).

## Revendications

1. Procédé pour lier une vis métallique (1, 1') à une pièce en matière plastique (2), comprenant les étapes suivantes:
- fournir une première pièce en matière plastique (2) et une vis métallique (1, 1') et
- enfoncer la vis (1, 1') dans une surface de la première pièce en matière plastique (2) par pressage, la vis (1, 1') étant mise en rotation lors du pressage et la vitesse de rotation de la vis (1, 1') étant choisie de sorte que la première pièce en matière plastique (2) soit plastifiée pour que la vis (1, 1') après l'arrêt de la rotation soit ancrée dans la première pièce en matière plastique (2) par correspondance de forme,
**caractérisé en ce que** la vis (1, 1') est plastifiée et déformée et la pointe (5) de la vis (1, 1') est déformée, de sorte que la pointe de la vus (1, 1') prenne une forme bombée, et que le diamètre (D) de la pointe (5) soit supérieure à celui de la partie de la vis (1, 1') qui est enfoncée dans la première pièce en matière plastique (2) par pressage.

2. Procédé de la revendication 1, dans lequel la vis (1, 1') présente un profil (12, 13) sur sa surface périphérique.

3. Procédé selon l'une des revendications 1 ou 2, dans lequel une deuxième pièce en matière plastique est placée sur la première pièce en matière plastique (2) et la vis est enfoncée (1, 1') par pressage avec rotation dans la première et la deuxième pièce en matière plastique (2).

4. Procédé selon l'une des revendications 1 à 3, dans lequel une première pièce métallique (6) est posée sur la première pièce en matière plastique (2) sur une surface, opposée à la surface, dans laquelle la vis (1, 1') est enfoncée et
dans lequel la vis (1, 1') est enfoncée par pressage avec rotation dans la première pièce en matière plastique (2) à une profondeur telle que la pointe (5) de la vis (1, 1') vient en contact avec la première pièce métallique (6).

5. Procédé de la revendication 4, dans lequel une liaison soudée (7) est formée entre la vis (1, 1') et la première pièce métallique (6).

6. Procédé selon l'une quelconque des revendications 1 à 5, dans lequel, une deuxième pièce métallique (8) comportant un trou traversant (9) pour la vis (1, 1') est agencée au-dessus la surface supérieure de la première pièce en matière plastique (2), dans laquelle la vis (1, 1') est enfoncée par pressage avec rotation, , et
dans lequel la vis (1, 1') est guidée à travers le trou (9) et est enfoncée par pressage avec rotation dans la première pièce en matière plastique (2).

7. Procédé de la revendication 6, dans lequel la vis (1, 1') présente, à son extrémité opposée à la première pièce en matière plastique (2), une tête (10), qui présente par rapport à la partie qui est enfoncée dans la pièce en matière plastique (2) un plus grand diamètre.

8. Procédé de la revendication 7, dans lequel une liaison soudée (11) est formée entre la deuxième pièce métallique (8) et la tête (10).
